# EUROPEAN PATENT APPLICATION

(11) **EP 0 764 396 A1**
(43) Date of publication of application: **26.03.1997**
(21) Application number: 96610033.1
(22) Date of filing: 12.09.1996
(51) Int. Cl.: A01B 73/00

(54) **A towed mower**

(30) Priority: 13.09.1995 DK 1014/95
(71) Applicant: JF-Fabriken - J. Freudendahl A/S, 6400 Sonderborg (DK)
(72) Inventor: Freudendahl, Jan, 6400 Sonderborg (DK); Freudendahl, Jorn, 6400 Sonderborg (DK)
(74) Representative: Indahl, Peter Jensen

(57) **Abstract**

The mower (1) comprises an elongate body (2) which during operation is advanced substantially perpendicularly to its longitudinal direction and during transport is advanced substantially in its longitudinal direction, transport wheels (5) which during transport are placed on a wheel axis extending transversely to the longitudinal direction of the body (2), and a draw bar (8) adapted at its one end (23) to be connected freely swingably within a range of at least 60° in horizontal plane with a tractor (11) and at its other end is swingably connected with the body (2) of the mower to take up during operation a position extending laterally from the body (2) and during transport to take up a fixed position relative to the body (2), in which the end to be connected with the tractor is placed substantially centrally relative to the width of the mower in the transport position. The draw bar is divided into two parts (8a, 8b) which are adapted in such a way that the distance from the from the point of rotation of the swinging movement between the tractor and the part of the draw bar, which is locked relative to the body (2), to said wheel axis may be reduced, when the mower is switched over to its transport position.

## Description

The present invention relates to a towed mower comprising an elongate body which during operation is advanced substantially perpendicularly to its longitudinal direction and during transport is advanced substantially in its longitudinal direction, transport wheels which during transport are placed on a wheel axis extending transversely to the longitudinal direction of the body, and a draw bar adapted at its one end to be connected freely swingably within a range of at least 60° in horizontal plane with a tractor and at its other end is swingably connected with the body of the mower to take up during operation a position extending laterally from the body and during transport to take up a fixed position relative to the body, in which the end to be connected with the tractor is placed substantially centrally relative to the width of the mower in the transport position. A mower of this type is for instance known from EP-A-0 628 237 or from DK-U-9400411 and the corresponding DE-U-9417893.

Mowers of the type in question are during operation normally towed outside the track of the tractor, and if they are built with a big working width it is necessary to provide them with a correspondingly long draw bar, because otherwise big lateral forces may be exerted on the tractor and the mower, which will tend to get in behind the tractor on account of the forward pull therefrom and the friction against the movement of the mower.

However, a long draw bar gives problems in respect of manoeuvrability when the mower is transported in its transport position.

In the above-mentioned DK-U-9400411 and DE-U-9417893 a mower is shown, the draw bar of which is provided with a hinge joint with a vertical axis and a hydraulic cylinder for moving and controlling said hinge joint in a manner not described in detail, whereby the manoeuvrability allegedly is to be improved.

US-A-4 582 143 discloses a wide, towed agricultural implement with a transverse bar carrying tools, such as planting units. The implement is towed during operation behind the tractor in its track. When shifting for transport the two halves of the bar are swung forwardly to extend parallel towards the tractor, and the draw bar is extended to make room for the two bar halves. An arm at the end of the draw bar carrying a transverse bar with ground wheels is swung downwardly, whereby the implement is lifted and the ground wheels brought closer to the tractor, and whereby the extension of the draw bar is partially compensated for.

The object of the invention is to provide a mower of the type mentioned by way of introduction, said mower having improved manoeuvrability during transport.

This object is met in that the draw bar is divided into two parts which are adapted in such a way that the distance from the point of rotation of the swinging movement between the tractor and the part of the draw bar, which is locked relative to the body, to said wheel axis may be reduced, when the mower is shifted to its transport position. By decreasing the distance from the wheel axis to the point of rotation of the swinging movement between the tractor and the part of the draw bar which is connected with the body of the mower is achieved that the advance-line of the mower in turning is closer to the advance-line of the tractor, which is an advantage, for instance when driving on narrow roads and through narrow entrances.

According to an embodiment the draw bar is designed such that the distance between its connection with the body and the connection with the tractor may be adjusted to at least two sizes. In this way the two parts of the draw bar may be longitudinally displaceable relative to each other. Alternatively, the draw bar may comprise a joint, by means of which a part of the draw bar may be swung 180° from its normal position to a transport position to lie parallel with and next to a second part of the draw bar, whereby means are provided for keeping said first part locked relative to the second part of the draw bar in the two positions. Finally, the draw bar may comprise two coupling devices for coupling with the tractor, one of which coupling devices being positioned at the end of the draw bar and the second coupling device being positioned between the ends of the draw bar, a lockable joint being placed at the second coupling device, whereby the part of the draw bar extending in front of the second coupling device may be swung between two fixed positions.

In another embodiment the division of the draw bar into two parts is provided thereby that between its ends it comprises a lockable joint which in its locked position is rigid and in its unlocked position is freely movable within a range of at least 60° in horizontal plane, and in that means are provided for preventing movement in horizontal plane between the tractor and the part of the draw bar which is connected therewith. By placing the lockable joint suitably the mower is brought to follow very closely the track of the tractor.

In a further embodiment the hinge axis of the lockable joint is placed centrally relative to the centre plane of the draw bar, and the joint is locked by means of a double-acting hydraulic cylinder, which is placed parallel with the draw bar and connects its two halves (8a, 8b), where a flow line with a shut-off valve connects the two sides of the hydraulic cylinder. Alternatively, the lockable joint may comprise a mechanical lock.

The invention will be described in detail in the following by means of examples of embodiments with reference to the schematic drawing, in which
Figs. 1 - 3 show different embodiments of mowers, in which the effective length of the draw bar may be varied,
Fig. 4 a lateral view of the draw bar according to Fig. 1,
Fig. 5 a lateral view of an alternative embodiment of the draw bar according to Fig. 4,
Fig. 6 a view of another embodiment of the mower according to the invention,
Fig. 7 a lateral view of a lockable joint in the draw bar of the mower in Fig. 6, and
Fig. 8 a view of the lockable joint in Fig. 7 seen from above.

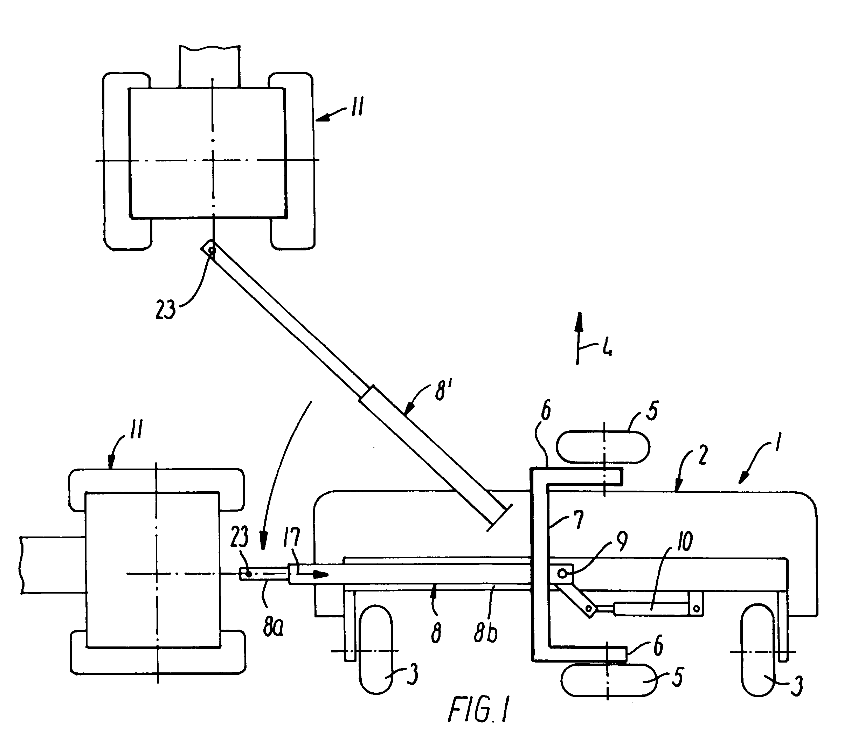

Fig. 1 shows a mower 1 with an elongate body 2 which during operations is carried by ground wheels 3 and advanced substantially transversely to its longitudinal direction as indicated by the arrow 4. During transport it is carried by transport wheels 5 which may be raised and lowered as they are mounted on carrier arms 6 which are in turn mounted on a pivotable shaft 7. Moreover, the mower 1 comprises a draw bar 8 which may be swung in horizontal plane around a pivot pin 9 by means of a hydraulic cylinder 10 between a transport position, in which the draw bar 8 extends substantially in the longitudinal direction of the body 2, and working positions, in which the draw bar extends laterally from the body 2, for instance as indicated by 8'.

The mower as described up till now is known from EP-A-0 628 237 which relates to the design of the transport wheels.

As a novel feature the draw bar 8 is lengthwise adjustable as it comprises two halves 8a, 8b, the half 8a being connected with a tractor 11 in a manner known per se by means of a coupling device 23 and being telescopable into the second half 8b which is fastened to the mower 1 at the pivot pin 9.

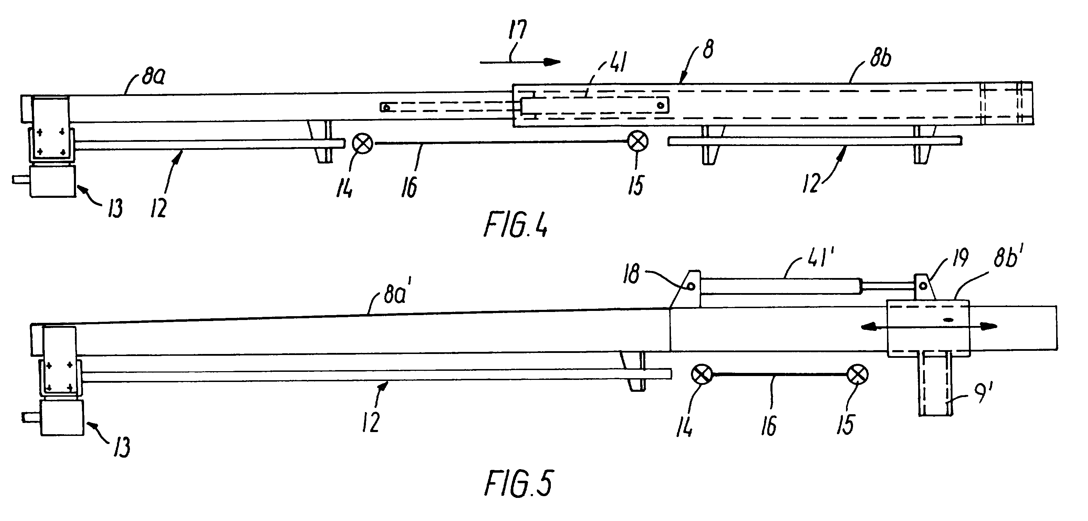

Fig. 4 is a lateral view of the draw bar 8 and shows a hydraulic cylinder 41 mounted inside the hollow draw bar 8. A power transmission shaft 12 extends in a manner known per se below the draw bar 8 from an angle gear 13 at the front end of the draw bar to transmit power from the power take off of the tractor to the mower 1. The power transmission shaft 12 comprises between two cardan joints 14, 15 a telescopic shaft 16 which makes it possible for the power transmission shaft 12 to follow the extension and telescoping of the draw bar 8.

During operation, when the mower 1 is advanced in the direction of the arrow 4, the draw bar 8 will be extended to its biggest length as indicated by 8' to place the mower as far as possible behind the tractor 11, whereby the forces which on account of asymmetry and friction tend to pull the mower 1 in behind the tractor 11 are minimized. During transport the draw bar is telescoped as shown by an arrow 17 to minimize the distance between the rotational axis of transport wheels 5 and the fastening point of the draw bar 8 on the tractor 11, whereby the mower 1 during turning will follow the tracks of the tractor 11 more closely than if the draw bar had its operational length.

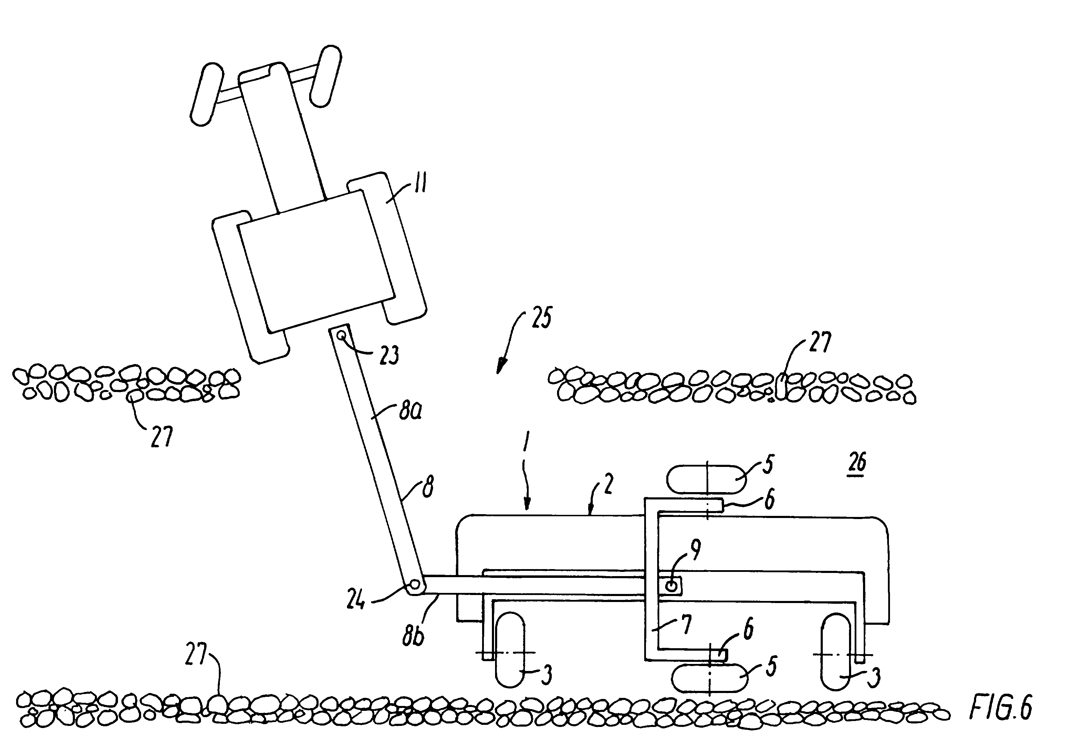

In Fig. 5 another embodiment of a telescoping draw bar is shown, the second half 8b' of the draw bar being minimized to a bushing carrying the axle journal 9', which is in this case fixedly fastened to the draw bar and has to be mounted in a hole in the body 2 of the mower. The hydraulic cylinder 41' for lengthwise adjustment of the draw bar 8 is in this case mounted on top of the draw bar between gusset plates 18, 19 on the front part 8a' of the draw bar and the bushing 8b', respectively.

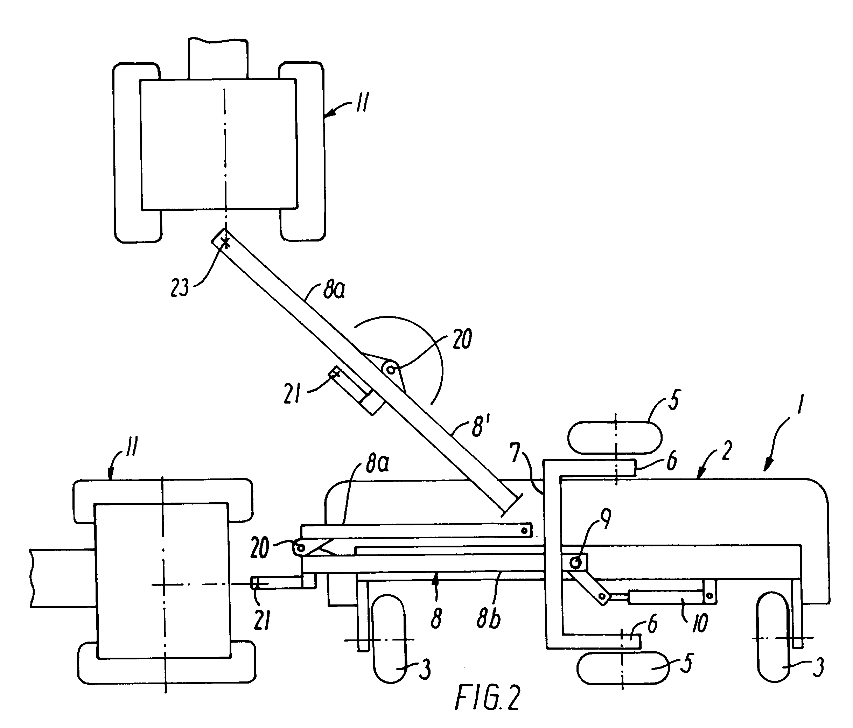

Fig. 2 shows another embodiment, in which the two halves of the draw bar 8 are connected by means of a hinge 20 with a vertical axis, and the second half 8b is also provided with a coupling device 21 for coupling with the tractor 11. During operation the two halves 8a and 8b are in extension of each other and are locked in this position by means of locking means not shown, and the front half 8a is coupled to the tractor 11. For transport the front half 8a is disconnected from the tractor 11, the two halves are folded around the hinge 20, and the coupling device 21 of the second half 8b is connected with the tractor 11. Hereby the same effect is obtained as described with reference to Fig. 1. The advantage of the embodiment according to Fig. 2 is that it is more simple from a technical point of view, but it has on the other hand the drawback that the shifting from operation to transport has to take place manually, which means that the tractor driver has to leave the tractor to disconnect the front half 8a from the tractor and connect the second coupling device 21 with the tractor.

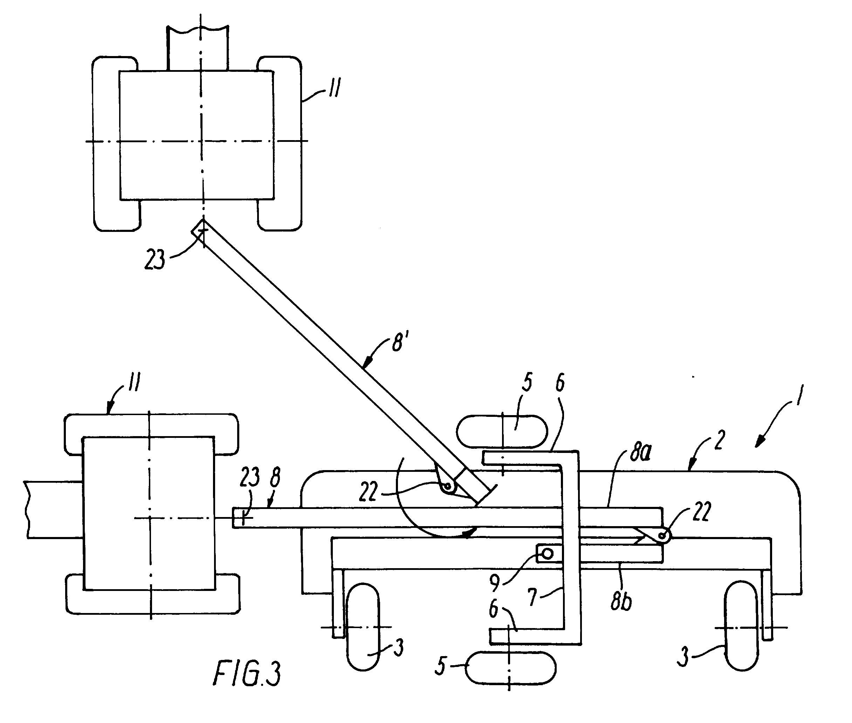

Fig. 3 shows an embodiment, in which the draw bar 8 near the end which is connected with the mower is provided with a hinge 22 with vertical axis. The two halves 8a and 8b may be folded around the hinge 22 and locked relative to each other as well in an operating position, in which they are positioned in extension of each other, as in a transport position, in which they are lying parallel next to each other. Locking means (not shown) are provided for keeping the two halves locked relative to each other in the two mutual positions. Due to the fact that the second half 8b of the draw bar in this case in the transport position is turned 180° relative to what is the case in Figs. 1 and 2, and on account of the fact that the shaft 7 carrying the carrier arms 6 of the transport wheels 5 is fastened to the second half 8b as described in the above EP-A-0 628 237, the carrier arms 6 extend downwardly and forwardly, whereas they in the examples shown in Figs. 1 and 2 extend downwardly and backwardly. This brings the rotational axis of the transport wheels 5 further forwards towards the tractor 11 and the fastening point thereof for the front half 8a of the draw bar.

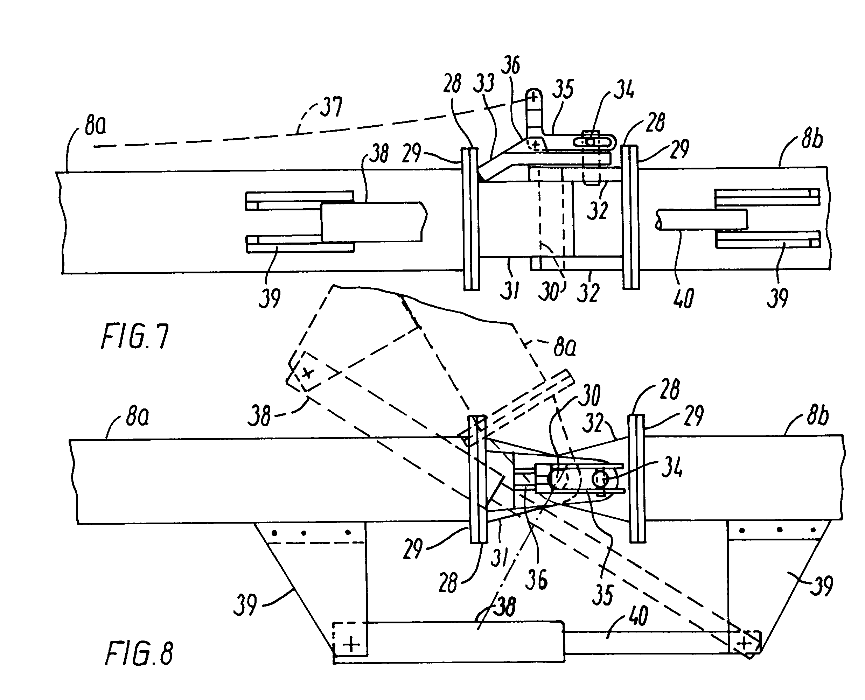

Fig. 6 shows an embodiment of a mower 1, in which the draw bar 8 at its centre is provided with a joint 24 which may be locked such that it is rigid in a position, in which the two halves 8a, 8b of the draw bar 8 are lying in extension of each other. Figs. 7 and 8 show an embodiment of the joint 24 with two different locking devices which shall be explained in detail in the following.

In Fig. 6 the mower 1 is shown during the passing of a gate 25 from a road 26 which is bordered by fences 27. The joint 24 is unlocked, while the connection between the coupling device and the tractor is barred in respect of movement in horizontal plane such that the connection between the front half 8a of the draw bar and the tractor seems rigid and the joint 24 movable. Hereby is obtained that the mower during transport as shown in Fig. 6 will substantially follow the track of the tractor such that it becomes possible to drive through narrow curved passages as shown in Fig. 6.

Figs. 7 and 8 show an embodiment in which the joint 24 is designed as a unity, which through flanges 28 is bolted to flanges 29 on the two halves 8a and 8b of the draw bar. The joint 24 has a vertical hinge tap 30 connecting the two flanges 28 of the joint with each other through an element 31 which is surrounded by two hinge flaps 32. The joint 24 is per se provided with a lock in form of a bracket 33 which is welded to the element 31 and the adjacent flange 28, where a locking tap 34 as shown in Fig. 7 may be passed through a hole in the bracket 33 and the upper hinge flap 32 to prevent movement around the hinge tap 30. The locking tap may be raised so as not to engage the hole in the hinge flap by means of an L-shaped lever arm 35 which is hinged to a flap 36 on the bracket 33. The lever arm 35 may by means of a string or a thin wire 37 be activated for lifting the locking tap 34.

Figs. 7 and 8 show in addition to the locking device described here a second locking device in form of a hydraulic cylinder 38 with piston 40 extending between brackets 39 on the two halves 8a, 8b of the draw bar 8. The two ends of the hydraulic cylinder 38 are connected with a conduit (not shown) with a shut-off valve. Thereby the piston 40 of the hydraulic cylinder may be pulled out and pushed into the cylinder, when the shut-off valve is open, whereas the movement of the piston 40 is blocked, when the shut-off valve is closed and the joint will consequently be locked, when the shut-off valve is closed. Fig. 8 shows in dash-dot line the maximum deflection of the joint 24 when it is provided with the hydraulic cylinder 38.

## Claims

1. A towed mower (1) comprising an elongate body (2) which during operation is advanced substantially perpendicularly to its longitudinal direction and during transport is advanced substantially in its longitudinal direction, transport wheels (5) which during transport are placed on a wheel axis extending transversely to the longitudinal direction of the body (2), and a draw bar (8) adapted at its one end (23) to be connected freely swingably within a range of at least 60° in horizontal plane with a tractor (11) and at its other end is swingably connected with the body (2) of the mower to take up during operation a position extending laterally from the body (2) and during transport to take up a fixed position relative to the body (2), in which the end to be connected with the tractor is placed substantially centrally relative to the width of the mower in the transport position, **characterized** in that the draw bar is divided into two parts (8a, 8b) which are adapted in such a way that the distance from the point of rotation of the swinging movement between the tractor and the part of the draw bar which is locked relative to the body (2), to said wheel axis may be reduced, when the mower is switched over to its transport position.

2. A mower according to claim 1, **characterized** in that the draw bar (8) is designed such that the distance between its connection with the body (2) and the connection with the tractor (11) may be adjusted to at least two sizes.

3. A mower according to claim 2, **characterized** in that the two parts (8a, 8b) of the draw bar is longitudinally displaceable relative to each other.

4. A mower according to claim 2, **characterized** in that the draw bar comprises a joint (22), by means of which one part (8b) of the draw bar (8) may be swung 180° from its operating position (8') to a transport position where it is lying parallel with and next to a second part (8a) of the draw bar (8), and means for keeping said first part (8) locked relative to the second part (8a) of the draw bar (8) in the two positions.

5. A mower according to claim 2, **characterized** in that the draw bar (8) comprises two coupling devices (23, 21) for coupling with the tractor (11), one of which coupling devices (23) being positioned at the end of the draw bar (8) and the second coupling device (21) being positioned between the ends of the draw bar (8), and a lockable joint (20) placed at the second coupling device (21), whereby the part (8a) of the draw bar (8) extending in front of the second coupling device (21) may be swung between two fixed positions.

6. A mower according to claim 1, **characterized** in that the division of the draw bar (8) into two parts (8a, 8b) is provided thereby that between its ends it comprises a lockable joint (24) which in its locked position is rigid and in its unlocked position is freely movable within a range of at least 60° in horizontal plane, and in that means are provided for preventing movement in horizontal plane between the tractor (11) and the part (8a) of the draw bar (8) which is connected therewith.

7. A mower according to claim 6, **characterized** in that the hinge axis of the lockable joint (24) is placed centrally relative to the centre plane of the draw bar (8).

8. A mower according to claims 6 or 7, **characterized** in that the joint (24) is locked by means of a double-acting hydraulic cylinder (38), which is placed parallel with the draw bar (8) and connects its two halves (8a, 8b), where a conduit with a shut-off valve connects the two sides of the hydraulic cylinder (38).

9. A mower according to claims 6 or 7, **characterized** in that the lockable joint (24) comprises a mechanical lock.
